# EUROPÄISCHE PATENTANMELDUNG

(11) **EP 4 714 646 A1**
(43) Veröffentlichungstag der Anmeldung: **25.03.2026**
(21) Anmeldenummer: 24201556.8
(22) Anmeldetag: 20.09.2024
(51) Int. Cl.: B31D 1/02, B32B 7/12, B32B 37/12, C09J 7/29, C09J 7/38, G09F 3/00

(54) **VERFAHREN ZUR HERSTELLUNG EINES HAFTVERBUNDS MIT INNENLIEGENDEN AUSGESTANZTEN AUSNEHMUNGEN**

(71) Anmelder: Securikett Ulrich & Horn GmbH, 2482 Münchendorf (AT)
(72) Erfinder: Ulrich-Horn, Marietta, 2352 Gumpoldskirchen (AT)
(74) Vertreter: Schwarz & Partner Patentanwälte GmbH

(57) **Zusammenfassung**

Die Erfindung betrifft einen Haftverbund (1) umfassend ein Trägermaterial (5) und ein Substrat, insbesondere Selbstklebematerial (2), mit zumindest einer innenliegenden ausgestanzten Ausnehmung (11), wobei der Haftverbund (1) ein mit einer haftungssteuernden Oberflächenbeschichtung (6) beschichtetes Trägermaterial (5), ein Obermaterial (3) und einen Klebstoff (4) umfasst, wobei das Obermaterial (3) gestanzt ist und zumindest ein Substrat und zumindest einen Stanzabfall (7) ausbildet, der innerhalb des zumindest einen Substrats liegt, wobei das Trägermaterial (5) zumindest einen ersten Bereich (8) mit der haftungssteuernden Oberflächenbeschichtung (6) und zumindest einen zweiten Bereich (9) frei von der Oberflächenbeschichtung (6) aufweist, wobei das zumindest eine Substrat über einem ersten Bereich (8) angeordnet ist und der zumindest eine Stanzabfall (7) über einem zweiten Bereich (9) angeordnet ist, wobei sich Klebstoff (4) zwischen dem zweiten Bereich (9) und dem Stanzabfall (7) befindet. Weiters betrifft die Erfindung ein Verfahren zur Herstellung des Haftverbundes (1).

## Beschreibung

Die vorliegende Erfindung bezieht sich allgemein auf das Gebiet der Haftverbundtechnologie, und insbesondere auf Techniken zur Herstellung von Haftverbunden umfassend ein Trägermaterial und ein Substrat mit zumindest einer innenliegenden ausgestanzten Ausnehmung.

In der Vergangenheit wurden verschiedene Verfahren zur Herstellung von Haftverbunden entwickelt, die darauf abzielen, Selbstklebematerialien wie Etiketten effizient und kostengünstig herzustellen. Ein typisches Verfahren umfasst das Bereitstellen eines Trägermaterials und eines Obermaterials, wobei auf der Unterseite des Obermaterials ein Klebstoff aufgetragen ist. Diese Materialien werden dann zusammengeführt, z.B. laminiert, sodass die klebstoffbeschichtete Unterseite des Obermaterials mit der Oberseite des Trägermaterials verbunden wird.

In vielen Anwendungen werden Etiketten gewünscht, die spezielle Formen haben, z.B. innenliegende Ausnehmungen. Das kann zum Beispiel notwendig sein, wenn ein Produkt unterhalb/dahinter zumindest teilweise sichtbar sein soll, oder wenn man ein Etikett zum Abdecken einer Tasse wie einer Lebensmitteltasse, insbesondere Obsttasse, benötigt und das verpackte Obst und/oder Gemüse atmen muss. Innenliegende Ausnehmungen können auch den Zweck haben, einen Haken oder einen Faden im Etikett zu befestigen, oder sie dienen dem Zweck, ein Material instabiler und brüchiger zu machen, um das unbemerkte Abziehen des Selbstklebematerials zu erschweren. Die innenliegenden Ausnehmungen werden in der Regel durch Stanzen des auf dem Trägermaterial befindlichen Obermaterials erzeugt, d.h. das Obermaterial kann direkt auf das Trägermaterial geklebt und anschließend gestanzt werden, um die gestanzten Ausnehmungen zu formen. Dieses Verfahren erfordert präzise Stanzwerkzeuge, und eine besondere Herausforderung bei diesem Verfahren ist das Management der Stanzabfälle, die innerhalb der gestanzten Etiketten verbleiben können und entfernt werden müssen.

Auch andere Selbstklebematerialien oder auch nicht-selbstklebende Etiketten können Öffnungen und Aussparungen benötigen, etwa um die Luftdurchlässigkeit oder Verformbarkeit zu verbessern, oder um optische Effekte, wie Lichtdurchlässigkeit zu erzielen. Auch kann es aus Gründen der besseren Recyklierbarkeit einer mit Selbstklebematerial beklebten Verpackung vorteilhaft sein, den Anteil an Selbstklebematerial durch Aussparungen auf das Notwendige zu reduzieren.

Im Stand der Technik werden Ausnehmungen im Selbstklebematerial typischerweise mit Hilfe von Stanzblechen, Stanzzylindern oder durch Lasertechnologie durchgeführt. Nach dem Stanzen des Selbstklebematerials müssen die ausgestanzten Teile entfernt werden, was keineswegs trivial ist.

Häufig werden auch Etikettenmaterial und Trägermaterial gemeinsam durchgestanzt, um gleichzeitig oder anschließend die Ausstanzungen durch Absaugen, Ausblasen oder Auswerfen zu entfernen. Dies geschieht entweder mittels eines Absaugtrichters, oft in Kombination mit einem Spezialzylinder mit Auswerfern, oder durch einen Hohlzylinder, in den die losen Teile des Obermaterials zusammen mit dem Klebstoff und dem Trägermaterial eingesaugt werden.

Die zum Stanzen und Entfernen der losen Materialteile verwendeten Werkzeuge sind meist aus massivem Stahl oder gelochten Stahl-Magnet-Zylindern und bringen hohe Investitionskosten mit sich. Daher eignen sich diese herkömmlichen Verfahren zur Entfernung der Ausstanzungen nur für große Auflagen, da die hohen Kosten durch die größeren Produktionsvolumina amortisiert werden können. Insbesondere bei großen Ausstanzungen stoßen diese massiven Werkzeuge an ihre Grenzen, da sie Schwierigkeiten beim Absaugen der größeren Stanzabfälle haben. Nachteilig oder schwierig kann es sich auch erweisen, dass klebrige Teile abgesaugt oder ausgeblasen werden müssen.

Eine alternative, jedoch weniger verbreitete Methode zum Entfernen der Ausstanzungen besteht darin, einen Klebstoff auf die Oberseite der losen Teile, d.h. des Stanzabfalls, zu drucken und anschließend ein Laminat von oben zuzuführen. Die losen Teile haften dann am Laminat und werden zusammen mit diesem entfernt. Dieses Verfahren ist jedoch ressourcenintensiv und stellt somit eine weniger kosteneffiziente Lösung dar. Ein derartiges Verfahren wird beispielsweise in der DE 19936017 C1 gezeigt.

EP 0973141 A1 zeigt Etikettenbögen mit Etiketten ohne innenliegende Ausnehmungen, wobei auf einer Trägerschicht teilweise eine haftungssteuernde Releaseschicht aufgebracht ist. Dadurch kann das Etikett von der Trägerschicht abgelöst, während der Rand des Obermaterials am Trägermaterial verbleibt. WO 9717194 A1 zeigt Etiketten ohne innenliegende Ausnehmungen, wobei auf einer Trägerschicht teilweise eine haftungssteuernde Releaseschicht aufgebracht ist und auf einem Obermaterial teilweise eine Klebstoffschicht aufgebracht ist. Nach einem Stanzen des Obermaterials kann das Etikett abgelöst werden. US 5704650 A zeigt eine weitere Verwendung einer teilweise aufgetragenen Releaseschicht, wobei hier auch das Trägermaterial durchstanzt ist, sodass Teile des Trägermaterials am Obermaterial verbleiben. Andere Teile des Obermaterials können als Postkarten ausgelöst werden.

Zusammengefasst weisen die derzeit verfügbaren Techniken zur Entfernung von Stanzabfällen eine Reihe von Nachteilen auf, die entweder durch das Durchtrennen auch des Trägermaterials zum Ausdruck kommen, wodurch dieses instabiler wird, durch hohe Investitionskosten und begrenzte Eignung für große Ausstanzungen, sowie überhaupt die Problematik des Prozesses im Kontext von Selbstklebematerial beim Absaugen oder Ausblasen der Ausnehmungen Andere Verfahren verursachen erhöhten Produktionsabfall durch ein Hilfslaminat. Diese Faktoren lassen Raum für die Entwicklung neuer, effizienterer Verfahren.

Die Erfindung setzt sich zum Ziel, einen Haftverbund umfassend ein Trägermaterial und ein Substrat mit zumindest einer innenliegenden ausgestanzten Ausnehmung und ein Verfahren zur Herstellung eines derartigen Haftverbundes bereitzustellen, mit denen die oben genannten Nachteile überwunden werden können.

Dieses Ziel wird in einem ersten Aspekt der Erfindung durch ein Verfahren zur Herstellung eines Haftverbunds umfassend ein Trägermaterial und ein Substrat, insbesondere ein Selbstklebematerial, mit zumindest einer innenliegenden ausgestanzten Ausnehmung erreicht, welches die folgenden Schritte umfasst:
- Bereitstellen des Trägermaterials, des Obermaterials, einer haftungssteuernden Oberflächenbeschichtung und eines Klebstoffs,
- Zusammenführen des Trägermaterials und des Obermaterials, wobei die Oberflächenbeschichtung und der Klebstoff zwischen dem Trägermaterial und dem Obermaterial angeordnet sind,
- Stanzen des Obermaterials zur Trennung des Obermaterials in zumindest ein Substrat und zumindest einen Stanzabfall, der innerhalb des zumindest einen Substrats liegt,
wobei auf dem Trägermaterial zumindest ein erster Bereich mit der

Oberflächenbeschichtung und zumindest ein zweiter Bereich frei von Oberflächenbeschichtung vorgesehen ist, wobei der Schritt des Stanzens derart erfolgt, dass das zumindest eine Substrat zumindest teilweise über einem ersten Bereich angeordnet ist und der zumindest eine Stanzabfall zumindest teilweise über einem zweiten Bereich angeordnet ist, wobei sich nach dem Zusammenführen Klebstoff zwischen dem zweiten Bereich und dem auszustanzenden bzw. ausgestanzten Stanzabfall befindet, sodass nach dem Abziehen des Substrats der Stanzabfall am Trägermaterial anhaftet, um die zumindest eine innenliegende ausgestanzte Ausnehmung freizulegen.

Erfindungsgemäß wird das Trägermaterial nicht vollflächig mit der Oberflächenbeschichtung versehen, sondern an jenen zweiten Bereichen, über denen die Stanzabfälle liegen, liegt keine Oberflächenbeschichtung vor, wodurch beim Abziehen ("Spenden") des Substrats bzw. des Selbstklebematerials die innenliegenden Stanzabfälle auf dem Trägermaterial verbleiben werden.

Unter Substrat wird hierin ein nach dem Ablösen vom Trägermaterial zusammenhängendes Element verstanden, welches zumindest eine innenliegende Ausnehmung aufweist, die durch das Entfernen des Stanzabfalls gebildet wird. Wenn das Substrat an seiner Unterseite Klebstoff aufweist, wird es auch als Selbstklebematerial bezeichnet, jedoch muss sich der Klebstoff nicht vollflächig auf dem Selbstklebematerial befinden. Durch den Klebstoff an Teilen der Unterseite ist es weiterhin möglich, das Selbstklebematerial auf andere Gegenstände aufzukleben.

Wenn das Substrat keinen Klebstoff an seiner Unterseite aufweist, d.h. der Klebstoff zwischen Trägermaterial und Obermaterial nur unter den Stanzabfällen bzw. unter dem Gitterabfall vorliegt, kann es als nicht-selbstklebendes Substrat bezeichnet werden.

Das Obermaterial und damit auch das Substrat ist in der Regel eben und hat eine Dicke von z.B. 13 bis 350 µm, bevorzugt 30 bis 200µm. Das Obermaterial bzw. das Substrat besteht z.B. aus beschichtetem oder unbeschichtetem Papier, Kunststoff wie PE, PP, PET, PS oder PVC oder auch aus metallischen oder metallisierten Folien und/oder Papieren. Das Substrat kann im Allgemeinen auch als Bedruckstoff bezeichnet werden, jedoch ist es auch nicht zwingend, dass das Substrat bedruckt wird.

Es sei angemerkt, dass hierin unter "Obermaterial" das noch ungestanzte Material bezeichnet wird, das später zum Substrat bzw. zum Selbstklebematerial bzw. zu einem Etikett verarbeitet wird. Nach dem Stanzen der innenliegenden Ausnehmungen ist das Obermaterial in das Substrat und die Stanzabfälle getrennt. In anderen Worten ist das Substrat das Obermaterial abzüglich der Stanzabfälle. Wenn das Substrat mit Klebstoff versehen ist, kann es als Selbstklebematerial bezeichnet werden. Wenn auch Außenkonturen in das Substrat geschnitten werden, wird es als Etikett, d.h. selbstklebendes Etikett oder nicht-selbstklebendes Etikett, bezeichnet. In diesem Fall wird zumindest ein Stanzabfall bzw. eine innenliegende Ausnehmung innerhalb der Außenkonturen liegen. Das Stanzen der Außenkonturen kann gleichzeitig mit dem Stanzen der Stanzabfälle erfolgen oder in einem zweiten Schritt des Stanzens nach dem Stanzen der Stanzabfälle, sodass z.B. ein Bedruckvorgang zwischen den zwei Stanzvorgängen stattfinden kann.

Als Hintergrund der Erfindung sei erwähnt, dass die Trägermaterialien üblicherweise entweder aus Kunststoff (in der Regel PET oder PP) oder aus Papier (etwa Glassine oder Kraftpapier) bestehen. Da diese Trägermaterialien jedoch eine hohe Oberflächenspannung aufweisen, würde der Klebstoff des Selbstklebematerials (sofern ein solches hergestellt werden soll) ohne weitere Maßnahmen nur schwer lösbar auf dem Trägermaterial kleben, wodurch das Selbstklebematerial nicht vom Trägermaterial gelöst werden könnte. Aus diesem Grund ist das Trägermaterial silikonisiert oder mit einer anderen klebstoffabweisenden Oberflächenbeschichtung versehen. Durch die niedrige Oberflächenspannung (Elektronegativität) von Oberflächenbeschichtungen wie Silikon (22-24 mN/m) kann der Klebstoff keine große Adhäsion herstellen. Zum Abziehen des Selbstklebematerials von silikonisierten Trägermaterialien sind Kräfte zwischen 0,001 N bis 2 N notwendig.

Während die Trägermaterialien im Stand der Technik vollflächig mit der Oberflächenbeschichtung beschichtet werden, wird erfindungsgemäß vorgesehen, dass das Trägermaterial im Bereich der durch Stanzung erzielten Ausnehmungen zumindest teilweise unbeschichtet bzw. unsilikonisiert ist. Dadurch kann die vormals als nachteilig angesehene hohe Oberflächenspannung des unbeschichteten Trägermaterials dazu ausgenutzt werden, um die Stanzabfälle beim Spenden des Selbstklebematerials bzw. Substrats zurückzuhalten. Wie eingangs erläutert wird dies dadurch erzielt, dass der sich zwischen dem Stanzabfall und dem unbeschichteten Trägermaterial befindliche Klebstoff eine größere Adhäsion herstellt als der Klebstoff zwischen dem Selbstklebematerial bzw. Substrat und dem beschichteten Trägermaterial.

Die Vorteile der erfindungsgemäßen Lösung sind, dass keine aufwändigen Werkzeuge, Verfahren und Produktionsschritte zum Entfernen der Stanzabfälle notwendig sind und auch keine Laminate für den Abzug der Stanzabfälle eingesetzt werden müssen. Weiters muss das Trägermaterial selbst nicht mit Ausnehmungen versehen werden, wodurch der Haftverbund stabiler und reißfester ist. Gleichzeitig können mit der Erfindung große Ausstanzungen umgesetzt werden. Weiters können mit der Erfindung komplexe Ausstanzungen erzielt werden, die z.B. spitze Winkel aufweisen, was mit anderen Verfahren zum Erzeugen von innenliegenden Ausnehmungen nur schwer möglich ist.

Hierin wird als Oberseite des Obermaterials jene Seite bezeichnet, die dem Trägermaterial abgewandt ist. Als Unterseite des Obermaterials wird jene Seite bezeichnet, die dem Trägermaterial zugewandt ist. Als Unterseite des Trägermaterials wird jene Seite bezeichnet, die dem Obermaterial abgewandt ist. Als Oberseite des Trägermaterials wird jene Seite bezeichnet, die dem Obermaterial zugewandt ist.

An dieser Stelle sei erwähnt, dass die zweiten Bereiche, in denen das Trägermaterial unbeschichtet ist, zwar deckungsgleich zu den herzustellenden Stanzlinien (Trennlinien) bzw. Ausnehmungen oder Stanzabfällen sein können, jedoch ist dies nicht zwingend. Beispielsweise könnte bei einem kreisrunden Stanzabfall vorgesehen werden, dass der zweite Bereich einen kleineren Durchmesser bzw. eine kleinere Innenkontur als der auszustanzende bzw. ausgestanzte Stanzabfall hat. Dabei könnten sich die Ränder des Stanzabfalls zwar weiterhin leicht vom Trägermaterial ablösen, jedoch wird der Stanzabfall zumindest im innenliegenden Bereich durch das Fehlen der Oberflächenbeschichtung am Trägermaterial effektiv zurückgehalten und verbleibt somit beim Abziehen des Selbstklebematerials bzw. Substrats am Trägermaterial.

Die Oberflächenbeschichtung wird jedoch in der Regel derart am Trägermaterial vorgesehen, dass diese vollständig unter dem Substrat bzw. Selbstklebematerial vorliegt, sofern in diesem Bereich auch Klebstoff vorgesehen wird, damit das Substrat bzw. Selbstklebematerial in der Folge leicht vom Trägermaterial abgezogen werden kann.

Hinsichtlich des Klebstoffs wird festgehalten, dass dieser in einer Ausführungsform vollflächig auf dem Obermaterial aufgebracht werden kann. In diesem Fall wird der Klebstoff auch am Substrat vorliegen, sodass das Substrat ein Selbstklebematerial ist. Damit liegt der Klebstoff jedenfalls auch an jenen zweiten Bereichen vor, an denen das Trägermaterial nicht beschichtet ist, wodurch die Stanzabfälle dank des Klebstoffs am Trägermaterial verbleiben werden. In diesen Ausführungsformen wird auch das später vom Trägermaterial abgezogene Selbstklebematerial vollflächig mit Klebstoff beschichtet sein.

Eine vollflächige Beschichtung des Selbstklebematerials ist jedoch nicht immer erwünscht. Beispielswiese könnte das Selbstklebematerial ein Etikett sein, das eine Abdeckung für eine Tasse wie eine Lebensmitteltasse, insbesondere Obsttasse, oder Tasse für Einzelteile bildet, in welchen Fällen der Klebstoff z.B. nur an den äußeren Rändern vorgesehen werden soll, damit ein innenliegender Bereich an der Unterseite des Obermaterials, mit dem das Obst oder die Einzelteile in Berührung kommt, frei von Klebstoff bleiben kann. Weiters kann in dieser Variante Klebstoff eingespart werden, sodass das Herstellungsverfahren weniger ressourcenintensiv ist. Wenn in diesem innenliegenden Bereich nun jedoch Ausstanzungen vorgesehen werden soll, werden zusätzlich Klebepunkte unterhalb der Stanzabfälle vorgesehen, damit die Stanzabfälle am Trägermaterial verbleiben. Wenn der innenliegende Bereich des Selbstklebematerials wie erläutert frei von Klebstoff sein soll, wird vorgesehen, dass der Bereich des Selbstklebematerials nach dem Zusammenführen unmittelbar um den auszustanzenden bzw. ausgestanzten Stanzabfall frei von Klebstoff ist. An dieser Stelle sei erwähnt, dass das Trägermaterial im innenliegenden Bereich des Selbstklebematerials die genannte Oberflächenbeschichtung aufweisen oder frei von dieser sein kann, da an dieser Stelle kein Klebstoff vorgesehen ist.

In der beschriebenen Ausführungsform des Selbstklebematerials als Deckel für eine Tasse oder ein anderes Verpackungsmaterial kann bevorzugt vorgesehen werden, dass sich nach dem Zusammenführen Klebstoff nur an einem oder mehreren Randbereichen, bevorzugt nur an einem umlaufenden Rand, eines aus Selbstklebematerial geformten Etiketts befindet (und das Selbstklebematerial in einem innerhalb des umlaufenden Randes befindlichen Bereichs frei von Klebstoff ist), wobei sich Klebstoff als zumindest eine Zusatzklebestelle zwischen dem zweiten Bereich und dem auszustanzenden bzw. ausgestanzten Stanzabfall befindet. Dieser Rand schließt nicht aus, dass das Selbstklebematerial außerhalb des Randes eine Lasche oder einen kurzen Überstand ohne Klebstoff aufweisen könnte, wobei hiervon jedoch auch abgesehen werden kann. Der Bereich, der frei von Klebstoff ist, kann beispielswiese mehr als 50 %, mehr als 70 % oder mehr als 90 % der Fläche des Selbstklebematerials betragen.

Auch andere Verpackungen wie Behälter und Beutel können Öffnungen haben, sodass die Erfindung auch bei diesen Verpackungen eingesetzt werden kann. Bei diesen Verpackungen mit Öffnungen kann das Selbstklebematerial bzw. Etikett als Abdeckung der Öffnung eingesetzt werden, wobei die Ausstanzungen im Selbstklebematerial beispielsweise als Sichtverbindung oder zur Belüftung eingesetzt werden.

Die Erfindung schafft weiters ein Kit-of-Parts umfassend ein Verpackungsmaterial und einen Haftverbund, wobei das Verpackungsmaterial eine Öffnung aufweist und das vom Haftverbund abziehbare Etikett derart auf dem Verpackungsmaterial aufklebbar ist, dass der mit Klebstoff versehene Rand auf dem Verpackungsmaterial klebt und der Bereich des Etiketts, der frei von Klebstoff ist, die Öffnung überdeckt.

Das Verpackungsmaterial kann beispielsweise ein Säckchen oder ein Beutel sein, in welchem Fall das Etikett z.B. einen Zugang zum Inhalt bieten kann und/oder eine Funktion als Sichtverbindung oder zur Belüftung erfüllt. In einem weiteren Fall kann das Verpackungsmaterial die genannte Tasse sein. In diesem Fall wird ein Kit-of-Parts mit einer Tasse und einem Haftverbund bereitgestellt, wobei die Tasse einen Boden und vier Seitenwände umfasst, die einen Innenraum der Tasse begrenzen (sodass die Seitenwände auf der dem Boden abgewandten Seite eine Öffnung ausbilden), wobei das Etikett des Selbstklebematerials des Haftverbunds auf zumindest zwei, bevorzugt alle vier Seitenwände aufklebbar ist, um den Innenraum zu begrenzen (d.h. um die Öffnung zu verschließen), und das Etikett Klebstoff nur in jenem Bereich aufweist, der mit den Seitenwänden in Berührung steht, wobei bevorzugt zumindest zwei gegenüberliegende Seitenwände, bevorzugt alle vier Seitenwände, an jenem Ende, der dem Boden abgewandt ist, einen nach außen abstehenden Steg aufweisen, auf welche die mit Klebstoff versehenen Randbereiche oder der umlaufende Rand des Etiketts aufklebbar sind. Das Kit-Of-Parts kann aber auch mit einer Tasse (ohne außen abstehenden Steg) und einem Haftverbund bereitgestellt werden, wobei die Befestigung des Etiketts bzw. Selbstklebematerials an der Tasse an zwei oder vier der Außenwände erfolgt, indem der Haftverbund seitwärts über die Außenwände gebogen und dort von außen verklebt wird. Die Ausnehmungen ermöglichen eine Sichtverbindung zum Produkt und zugleich eine Belüftung.

Wie bereits erläutert muss das Substrat jedoch nicht mit einem Klebstoff versehen sein, sodass auch nicht-selbstklebende Etiketten herstellbar sind, die für andere Anwendungszwecke herangezogen werden können.

Besonders bevorzugt wird das Substrat oder der Haftverbund mit Informationen und/oder Dekorationen bedruckt. Informationen können z.B. eine Produktbezeichnung oder ein Haltbarkeitsdatum sein.

Im Allgemeinen kann das Obermaterial bereits bedruckt sein, bevor es mit dem Trägermaterial verbunden wird, oder bevor die Stanzungen der innenliegenden Ausnehmungen bzw. Stanzabfälle vorgenommen werden. Wie im Folgenden erläutert, ermöglicht das erfindungsgemäße Verfahren jedoch, dass das Bedrucken auch erst nach dem Stanzen der Stanzabfälle vorgenommen werden kann.

Das oben erläuterte Herstellungsverfahren hat den besonderen Vorteil, dass dadurch ein Haftverbund bereitgestellt werden kann, der auch erst nachträglich bedruckt werden kann. In anderen Worten kann der Haftverbund (bevorzugt das Obermaterial bzw. das Substrat) bedruckt werden, bevor oder nachdem das Obermaterial im Bereich der Ausnehmungen gestanzt wurde oder als gesamtes Etikett gestanzt wurde, und während sich das Substrat und die Stanzabfälle noch auf dem Trägermaterial befinden. Dies ist deshalb relevant, da das Stanzen der inneren Teile des Haftverbundes bereits für viele Substrate bzw. Selbstklebematerialien bzw. Etiketten durchgeführt werden kann, ohne dass diese bedruckt werden müssen. Das Drucken, d.h. die individuelle Endausfertigung für den Kunden, kann dadurch in einer viel kleineren Stückzahl erfolgen und muss nicht gleichzeitig mit dem Stanzen durchgeführt werden. Insbesondere kann der Haftverbund bereits vorab erzeugt werden, danach über einen gewissen Zeitraum wie einige Tage, Wochen oder Monate gelagert werden und erst dann bedruckt werden. Das Stanzen erfolgt wahlweise bei der Herstellung des Haftverbundes oder nach der Bedruckung. Auch Mischformen sind möglich, wo etwa eine Etiketten-Außenkontur in einem anderen Arbeitsschritt als die Ausnehmungen gestanzt werden. Dies ist unter anderen deshalb vorteilhaft, da der Haftverbund während des Druckens noch eine ebene Oberfläche aufweist, da die Stanzabfälle noch nicht aus dem Obermaterial ausgelöst wurden. Es ergibt sich somit ein weitaus flexibleres Verfahren als bei Herstellungen, bei denen das Obermaterial bereits vor dem Abtrennen des Obermaterials vom Träger bedruckt wird.

Um den vorgenannten Schritt des Bedruckens nach dem Stanzen zu vereinfachen, umfasst das Obermaterial und/oder das Trägermaterial bevorzugt bereits vor dem Zusammenführen eine oder mehrere Steuermarken. Alternativ könnten die Steuermarken auch während der Zusammenführung auf dem Obermaterial und/oder Trägermaterial vorgesehen werden. Steuermarken können für das registerhaltige Drucken, Silikonisieren, Beschichten, Stanzen genutzt werden und sind spezielle Markierungen auf einem Substrat und/oder Trägermaterial, die zur Kontrolle und Steuerung des Druckprozesses verwendet werden. Durch die Steuermarken kann gegebenenfalls auch der Stanzvorgang an vorbestimmten Stellen des Obermaterials durchgeführt werden. Die Steuermarken haben jedoch den weiteren Vorteil, dass der (z.B. bis auf die Steuermarkten unbedruckte) Haftverbund nach dem Stanzen aus der Herstellungsmaschine entnommen werden und über einen Zeitraum gelagert werden kann. Danach kann der Haftverbund in einen Drucker oder eine Druckmaschine eingeführt werden und anhand der Steuermarken kann der Haftverbund zielgerecht bedruckt werden, sodass der Druck mit den Stanzlinien ausgerichtet ist, d.h. der Druck kann gezielt innerhalb des Substrats, und bevorzugt außerhalb der Stanzabfälle, vorgenommen werden. Wenn sich die Steuermarken auf dem Obermaterial befinden, sind diese üblicherweise auf einem äußeren Bereich außerhalb des Substrats, z.B. auf dem Gitter, vorgesehen.

Die genannten Steuermarken sind jedoch für den Druckvorgang nicht zwingend, wenn das Obermaterial nach dem Stanzen bedruckt werden soll. Beispielsweise könnte ein Druckvorgang das Obermaterial tapetenartig bedrucken, wobei hier jedoch keine Rücksicht darauf genommen wird, wo sich die Stanzlinien befinden.

In der Praxis kann insbesondere umgesetzt werden, dass der Haftverbund ohne Ausstanzungen in einem ersten Schritt hergestellt und mit Steuermarken für den darauffolgenden, späteren Druck- und Stanzprozess versehen werden kann, etwa in Kleinmengen in vielen Sorten. Im zweiten Schritt kann man diesen Haftverbund bedrucken und stanzen. Beispielsweise werden zuerst die Innenausnehmungen gestanzt, dann erfolgt der Bedruckvorgang, und danach der Stanzvorgang der Außenkonturen. Rund um die Außenkontur wird üblicherweise ein zwischen den Etiketten befindliches Gitter schon beim bzw. nach dem Drucken weggezogen. Es ist auch denkbar, dass das Stanzen und Entfernen dieses Gitters schon vor dem Bedrucken erfolgt, etwa weil mit Thermotransferdruckern eine letzte Information wie eine Chargennummer oder ein Ablaufdatum gedruckt wird.

Um die Oberflächenbeschichtung partiell auf das Trägermaterial aufzubringen, kann ein Flexodruckverfahren eingesetzt werden. Das Flexodruckverfahren ist ein direktes Hochdruckverfahren, bei dem flexible Druckplatten (z.B. aus Gummi oder Photopolymeren) verwendet werden, die auf zylindrische Druckformen montiert sind. Diese Druckplatten übertragen die Oberflächenbeschichtung durch direkte Berührung mit dem Trägermaterial. Das Flexodruckverfahren zeichnet sich durch hohe Druckgeschwindigkeiten und hervorragende Druckqualität aus.

Besonders bevorzugt ist die Oberflächenbeschichtung lichtaushärtbar, z.B. UV-aushärtbar. Die Verwendung einer lichtaushärtbaren Oberflächenbeschichtung bietet den Vorteil, dass die schnelle Aushärtung mittels Strahlung eine signifikante Verkürzung der Produktionszeiten ermöglicht, da die Beschichtung in einem sehr kurzen Zeitraum aushärtet und die Entstehung von Defekten minimiert wird, wodurch eine gleichmäßige und qualitativ hochwertige Beschichtungsoberfläche gewährleistet wird.

In einem weiteren Aspekt betrifft die Erfindung den mit dem oben beschriebenen Verfahren hergestellten Haftverbund, d.h. einen Haftverbund umfassend ein Trägermaterial und ein Substrat, insbesondere Selbstklebematerial, mit zumindest einer innenliegenden ausgestanzten Ausnehmung, wobei der Haftverbund ein mit einer haftungssteuernden Oberflächenbeschichtung beschichtetes Trägermaterial, ein Obermaterial und einen Klebstoff umfasst, wobei sich der Klebstoff zumindest abschnittsweise zwischen Trägermaterial und Obermaterial befindet und das Trägermaterial mit dem Obermaterial verbindet, wobei das Obermaterial gestanzt ist und zumindest ein Substrat und zumindest einen Stanzabfall ausbildet, der innerhalb des zumindest einen Substrats liegt, wobei das Trägermaterial zumindest einen ersten Bereich mit der haftungssteuernden Oberflächenbeschichtung und zumindest einen zweiten Bereich frei von der Oberflächenbeschichtung aufweist, wobei das zumindest eine Substrat über einem ersten Bereich angeordnet ist und der zumindest eine Stanzabfall über einem zweiten Bereich angeordnet ist, wobei sich Klebstoff zwischen dem zweiten Bereich und dem Stanzabfall befindet, sodass nach dem Abziehen des Substrats der Stanzabfall am Trägermaterial anhaftet, um die zumindest eine innenliegende ausgestanzte Ausnehmung freizulegen.

Nachfolgend wird die Erfindung anhand der beigefügten Figuren näher erläutert, die bevorzugte Ausführungsformen darstellen und zur besseren Verständlichkeit beitragen sollen. Die Figuren illustrieren verschiedene Aspekte und Ausführungsbeispiele der Erfindung und dienen zur Veranschaulichung der beschriebenen Merkmale und Vorteile. Es sei darauf hingewiesen, dass die Erfindung nicht auf die gezeigten Ausführungsformen beschränkt ist und verschiedene Modifikationen und Änderungen vorgenommen werden können, ohne den Schutzbereich der Erfindung zu verlassen.
Figur 1 zeigt einen Haftverbund, aus welchem ein Selbstklebematerial auslösbar ist, wobei beim Auslösen die Stanzabfälle am Trägermaterial zurückbleiben, um innenliegende Ausnehmungen im Selbstklebematerial zu bilden.
Die Figuren 2a bis 2d zeigen die Herstellung und die Verwendung des Haftverbunds aus Figur 1, wobei Figur 2a das Bereitstellen des partiell silikonisierten Trägermaterials und des Obermaterials zeigt; Figur 2b das Zusammenführen des partiell silikonisierten Trägermaterials mit dem Obermaterial zeigt; Figur 2c das Stanzen des Obermaterials zeigt; und Figur 2d das Trägermaterial und das vom Trägermaterial abgelöste Selbstklebematerial mit den innenliegenden ausgestanzten Ausnehmungen zeigt.
Figur 3 zeigt eine Anwendung eines erfindungsgemäßen Haftverbunds.
Figur 4 zeigt eine Tasse und ein darauf aufbringbares Selbstklebematerial mit innenliegenden ausgestanzten Ausnehmungen.
Die Figuren 5a und 5b zeigen die Herstellung eines Selbstklebematerials für die in Figur 4 gezeigte Anwendung.
Figur 6 zeigt ein Etikett zum Abdecken einer Tasse mit Schwächungslinien.
Figur 7 zeigt einen Haftverbund, auf dem sich eine Vielzahl von Etiketten befinden.

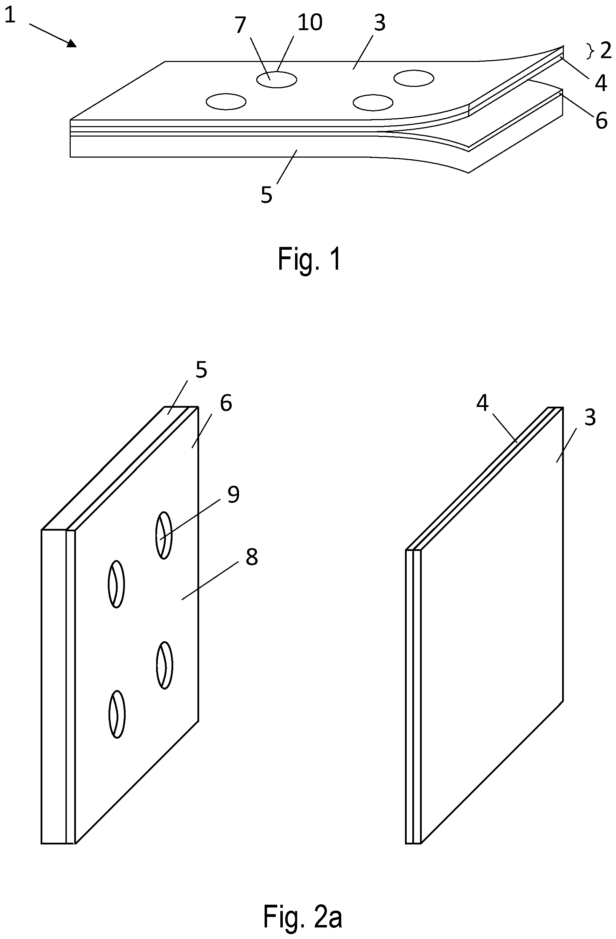

Figur 1 zeigt einen Haftverbund 1, von dem ein Selbstklebematerial 2 ablösbar ist. Das Selbstklebematerial 2 besteht aus Teilen eines Obermaterials 3 und einem Klebstoff 4. Damit das Selbstklebematerial 2 vor seiner Verwendung gelagert werden kann, umfasst der

Haftverbund 1 ein Trägermaterial 5, das teilweise mit einer Oberflächenbeschichtung 6 versehen ist. Bei der tatsächlichen Verwendung kann das Selbstklebematerial 2 vom oberflächenbeschichteten Trägermaterial 5 abgezogen, d.h. gespendet werden, z.B. um das Selbstklebematerial 2 auf einen anderen Gegenstand aufzukleben.

Das Obermaterial 3 ist derart gestanzt, dass es das Selbstklebematerial 2 und innerhalb des Selbstklebematerials 2 liegende Stanzabfälle 7 umfasst, die kein Bestanteil des Selbstklebematerials 2 sind. Um zu erzielen, dass die Stanzabfälle 7 beim Spenden des Selbstklebematerials 2 auf dem Trägermaterial 5 verbleiben, wird vorgesehenen, dass die Oberflächenbeschichtung 6 nur teilweise, d.h. partiell, auf dem Trägermaterial 5 vorgesehen ist. In anderen Worten ist nur ein erster Bereich 8 des Trägermaterials 5 mit der Oberflächenbeschichtung 6 versehen und ein zweiter Bereich 9 bleibt frei von der Oberflächenbeschichtung 6, siehe Figur 2a.

Bevor auf das Verfahren zur Herstellung des Haftverbundes 1 eingegangen wird, werden die Eigenschaften der Bestandteile des Haftverbunds 1 im Detail erläutert.

Das Obermaterial 3 kann aus einem beliebigen Material bestehen, z.B. aus beschichtetem oder unbeschichtetem Papier, Kunststoff wie PE, PP, PET, PS oder PCV oder auch aus metallischen oder metallisierten Folien und/oder Papieren. Das Obermaterial 3 kann beispielsweise auf der Oberseite oder der Unterseite bedruckt sein, z.B. um eine Werbebotschaft zu vermitteln oder um einen gewünschten farblichen Eindruck zu erwecken. Im Allgemeinen kann das Obermaterial 3 aber auch unbedruckt sein.

Der Klebstoff 4 ist in der Regel ein dauerklebriger Klebstoff und kann z.B. ein Acrylat-Klebstoff oder ein Kautschukklebstoff sein. Acrylate können lösungsmittelbasiert oder wasserbasiert sein und UV-gehärtet werden. Kautschukklebstoffe sind Hotmelts und können ebenfalls UV-gehärtet werden. UV-gehärtete Klebstoffe können so formuliert werden, dass sie für den direkten Hautkontakt zugelassen werden und/oder für den direkten und/oder indirekten Kontakt mit Lebensmitteln geeignet sind.

Das Trägermaterial 5 besteht in der Regel entweder aus Kunststoff (z.B. PET oder PP) oder aus Papier (z.B. Glassine oder Kraftabdeck). Da der Klebstoff 4 jedoch schwer lösbar mit dem Trägermaterial 5 verbunden wird, wenn diese zwei Schichten zusammengeführt werden, wird das Trägermaterial 5 zumindest in jenen Bereichen mit der Oberflächenbeschichtung 6 versehen, an denen das Selbstklebematerial 2 den Klebstoff 4 aufweist und leicht ablösbar sein soll.

Die Oberflächenbeschichtung 6 ist oder umfasst üblicherweise Silikon, jedoch könnten auch Fluorpolymere, Wachsbeschichtungen oder Polyolefin-Beschichtungen eingesetzt werden. Für die hierin beschriebenen Zwecke ist lediglich wesentlich, dass zum Abziehen des mit Klebstoff 4 versehenen Obermaterials 3 an den ersten Bereichen, an denen das Trägermaterial 5 eine Oberflächenbeschichtung 6 aufweist, eine geringere Kraft (z.B. von 0,001 N bis 3 N, bevorzugt 0,005 bis 0,6N, gemessen nach FINAT FTM3) benötigt wird als an den zweiten Bereichen, an denen das Trägermaterial 5 frei von der Oberflächenbeschichtung 6 ist, d.h. an denen der Klebstoff 4 unmittelbar mit dem Trägermaterial 5 in Kontakt kommt, wo eine größere Kraft z.B. ab 1 N, ab 10 N, ab 20 N oder ab 40 N, gemessen nach FINAT FTM2 zum Abziehen des Obermaterials 3 benötigt wird. Wenn der Klebstoff unmittelbar mit dem Trägermaterial in Kontakt kommt, sind die Stanzabfälle in der Regel mit dem Trägermaterial unlösbar verbunden bzw. nicht zerstörungsfrei ablösbar.

Im Folgenden wird das Verfahren zur Herstellung des Haftverbundes 1 anhand der Figuren 2a bis 2d erläutert.

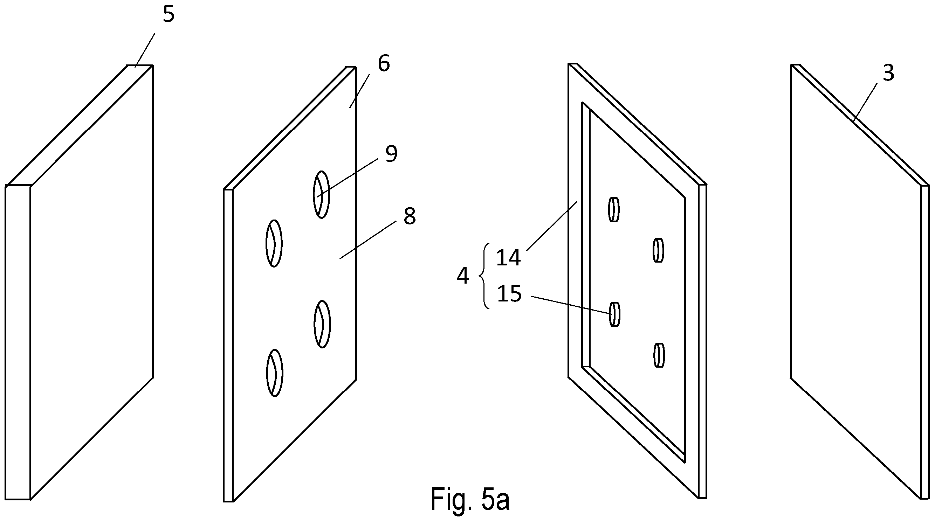

Figur 2a zeigt, dass eingangs das Trägermaterial 5 mit der partiell darauf befindlichen Oberflächenbeschichtung 6 bereitgestellt wird. Aus Figur 2a ist insbesondere ersichtlich, dass die Oberflächenbeschichtung 6 nur an den ersten Bereichen 8 vorliegt, nicht jedoch an den zweiten Bereichen 9, die frei von der Oberflächenbeschichtung 6 sind. Weiters wird das Obermaterial 3 bereitgestellt, das mit dem Klebstoff 4 versehen ist. Der Klebstoff 4 befindet sich in der dargestellten Ausführungsform vollflächig auf dem Obermaterial 3, wobei dies jedoch nicht zwingend ist, wie auch anhand der unten erläuterten Figur 5a ersichtlich ist.

An dieser Stelle sei hervorgehoben, dass das Obermaterial 3 wie dargestellt mit dem bereits darauf befindlichen Klebstoff 4 bereitgestellt werden kann, oder der Klebstoff 4 kann zuerst auf das Trägermaterial 5 mit der teilweise darauf befindlichen Oberflächenbeschichtung 6 aufgebracht werden und erst danach wird das Obermaterial 3 auf das Trägermaterial 5 mit Oberflächenbeschichtung 6 und Klebstoff 4 aufgebracht. Beide Varianten führen zu demselben Ergebnis.

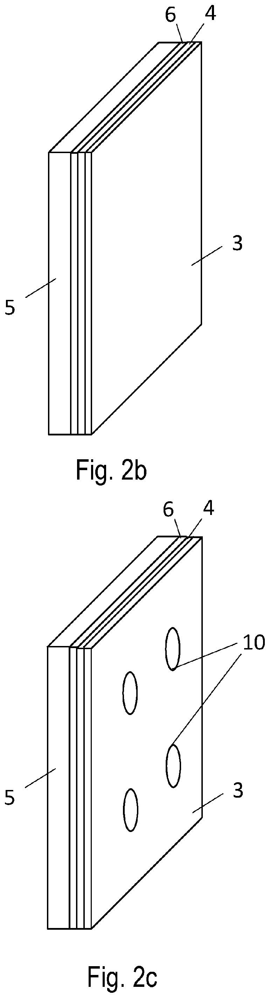

Figur 2b zeigt das Zusammenführen der bereitgestellten Komponenten, d.h. des Trägermaterials 5 mit der partiell darauf befindlichen Oberflächenbeschichtung 6 und des Obermaterials 3 mit dem darauf befindlichen Klebstoff 4. Zu diesem Zeitpunkt kommt der Klebstoff 4 an den ersten Bereichen 8 mit der Oberflächenbeschichtung 6 in Kontakt und an den zweiten Bereichen 9 mit dem Trägermaterial 5.

In Figur 2c ist gezeigt, dass das Obermaterial 3 nach dem Zusammenführen gestanzt werden kann, um eine Trennlinie 10 zwischen dem Selbstklebematerial 2 und dem Stanzabfall 7 zu erzeugen. Figur 2c zeigt insbesondere, dass auch mehrere Ausstanzungen in das Selbstklebematerial 2 gestanzt werden können, z.B. um vier Stanzabfälle 7 zu erzeugen. Die Ausstanzungen bzw. die Stanzabfälle 7 können eine beliebige Form haben, z.B. kreisrund, oval, rechteckig, sternenförmig oder unregelmäßig. Während des Stanzens können auch die Außenkonturen des Selbstklebematerials 2 gestanzt werden. An dieser Stelle sei festgehalten, dass in dieser Weise auch mehrere Selbstklebematerialien 2 auf dem Trägermaterial 5 vorliegen können, z.B. wenn das Trägermaterial 5 als langes Band ausgeführt ist, auf dem hintereinander mehrere gleiche Selbstklebematerialien 2 vorliegen sollen.

Der Schritt des Stanzens kann wie im Stand der Technik durchgeführt werden, z.B. durch ein Stanzblech, einen Stanzzylinder oder durch einen Laser. Das Stanzen erfolgt in der Regel derart, dass das Obermaterial 3 und der Klebstoff 4 durchgestanzt werden, wobei das Trägermaterial 5 jedoch nicht durchtrennt wird, z.B. nur angestanzt wird oder überhaupt nicht gestanzt wird.

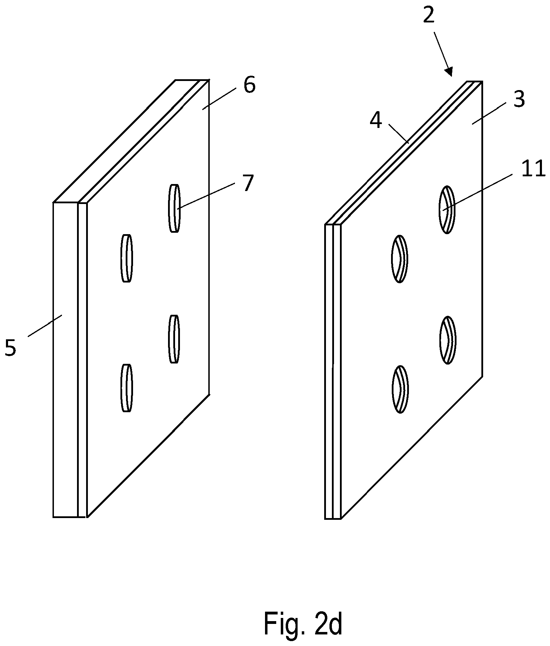

Sobald das Obermaterial 3 gestanzt wurde, ist der Haftverbund 1 fertig hergestellt und kann für seinen bestimmungsgemäßen Einsatz herangezogen werden, d.h. das Selbstklebematerial 2 kann gespendet werden. Figur 1 zeigt das Selbstklebematerial 2 während dem Spendevorgang und Figur 2d zeigt das abgezogene Selbstklebematerial 2. Aus Figur 2d ist insbesondere ersichtlich, dass die Stanzabfälle 7 auf dem Trägermaterial 5 verblieben sind, da dieses im Bereich der Stanzabfälle 7 ohne die Oberflächenbeschichtung 6 versehen war. Gleichfalls weist das Selbstklebematerial 2 nun Ausnehmungen 11 in jenen Bereichen auf, an denen die Stanzabfälle 7 durch den genannten Prozess ausgelöst wurden.

Aus der Zusammenschau der Figuren 2a bis 2d ist ersichtlich, dass mit der hierin beschriebenen Lösung ein Selbstklebematerial 2 mit innenliegenden ausgestanzten Ausnehmungen 11 bereitgestellt werden kann, bei dem der Stanzabfall 7 ohne massives Werkzeug oder ein zusätzliches Laminat ausgelöst wird.

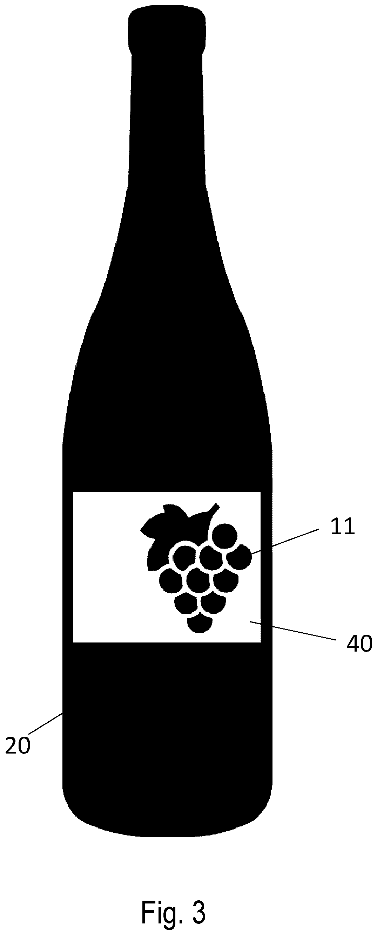

Figur 3 zeigt eine bevorzugte Anwendung eines Haftverbunds 1, der ein Selbstklebematerial 2 mit vollflächig darauf befindlichen Klebstoff 4 umfasst. Dieses Selbstklebematerial 2 wurde in ein Etikett 40 geformt, z.B. indem Außenkonturen in das Selbstklebematerial 2 gestanzt werde, wobei zumindest eine Ausnehmung 11 innerhalb der Außenkonturen liegt. Wie dargestellt wird eine Flasche 20 bereitgestellt, die beispielsweise aus durchsichtigem (z.B. transparenten oder transluzenten) oder opakem Material besteht. Wird nun ein Haftverbund 1 wie oben beschrieben bereitgestellt, kann das Etikett gespendet werden, wobei der Stanzabfall 7 wie oben beschrieben am Trägermaterial 5 verbleiben wird. Wird dieses Etikett 40 nun auf die Flasche 20 geklebt, ist die Flasche 20 durch die Ausnehmungen 11 innerhalb des Etiketts 40 weiterhin ersichtlich. Durch die Durchsichtigkeit der Flasche 20 ergibt sich, dass durch die Ausnehmungen 11 hindurch das innerhalb der Flasche 20 gelagerte Produkt ersichtlich wird, was einen besonders hochwertigen und ansprechenden optischen Effekt bewirkt. Im Allgemeinen kann vorgesehen werden, dass das Selbstklebematerial 2 bevorzugt auf ein durchsichtiges Verpackungsmaterial geklebt wird, in dem besonders bevorzugt Lebensmittel gelagert werden.

Figur 3 zeigt überdies, dass die Ausnehmungen 11 keine regelmäßigen Formen sein müssen, sondern auch komplexe Formen bilden können. Dies ist insofern überraschend, da derartige komplexe Ausnehmungen 11 bislang nur dadurch hergestellt werden konnten, dass Klebstoff von außen an die Stanzabfälle 7 vorgesehen wurde, und diese noch vor dem Spenden mittels einer Laminattechnik abgezogen wurden, wobei hier jedoch ein nachträgliches Bedrucken nicht bzw. nur schwer möglich ist. Unter komplexen Formen oder komplexen Ausnehmungen 11 können beispielsweise Formen verstanden werden, die zumindest einen spitzen Winkel aufweisen. Diesen komplexen Ausnehmungen 11 liegen gleich ausgestaltete komplexe Stanzabfälle 7 zugrunde.

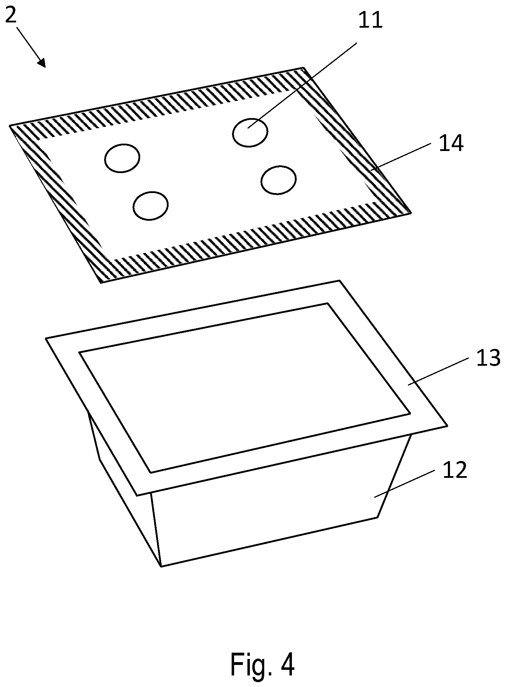

Figur 4 zeigt eine weitere Anwendungsmöglichkeit des hierin beschriebenen Haftverbunds 1. In diesem Fall soll ein Etikett 40 mit innenliegenden ausgestanzten Ausnehmungen 11 auf eine Tasse 12 mit einem Steg 13 aufgeklebt werden, in der beispielsweise Lebensmittel wie Obst oder Gemüse gelagert werden. Für dieses Etikett 40 bestehen die Anforderungen, dass dieses nur am äußeren umlaufenden Rand 14 mit Klebstoff 4 versehen werden soll, damit der Rand 14 des Selbstklebematerials 2 auf den Steg 13 der Tasse 12 geklebt werden kann und gleichzeitig der innenliegende Bereich des Etiketts 40 frei von Klebstoff 4 bleibt. Unter "innenliegender Bereich" wird hier der innerhalb des Randes 14 aus Klebstoff 4 liegende Bereich verstanden. Weiters soll das Etikett 40 Ausnehmungen 11 im genannten innenliegenden Bereich aufweisen, damit die in der Tasse 12 gelagerten Lebensmittel von außen mit Sauerstoff versorgt werden können und vom Lebensmittel freigesetzte Stoffe nach außen abgegeben werden können. Insbesondere dienen die Ausnehmungen 11 auch der Prävention von Kondenswasser, das sich in der Tasse 12 bilden kann.

Es entsteht somit eine Vorrichtung umfassend eine Tasse 12 und ein Etikett 40, wobei die Tasse 12 einen Boden und vier Seitenwände umfasst, die einen Innenraum der Tasse begrenzen, wobei alle vier Seitenwände an jenem Ende, der dem Boden abgewandt ist, einen nach außen abstehenden Steg 13 aufweisen, wobei das Etikett 40 auf dem Steg 13 aufgeklebt ist, um den Innenraum zu begrenzen, und das Selbstklebematerial 2 Klebstoff 4 nur in jenem Bereich (d.h. nur an einem umlaufenden Rand) aufweist, der mit dem Steg 13 in Berührung steht. Diese Vorrichtung geht aus seinem Kit-of-Parts umfassend die Tasse 12 und einem Haftverbund 1 hervor, von dem das Etikett 40 abgezogen wurde.

Die Tasse 12 müsste jedoch keinen umlaufenden Steg 13 aufweisen, sondern es könnten beispielsweise stattdessen zwei gegenüberliegende Seitenwände als Klebeflächen vorgesehen sein. In diesem Fall wird auch das Etikett 40 keinen umlaufenden Rand 14 mit Klebstoff 4 aufweisen, sondern zwei gegenüberliegende Randbereiche (Streifen) mit Klebstoff 4. In dieser Variante können zwei gegenüberliegenden Randbereiche des Etiketts 40 umgebogen werden, um das Etikett in Form eines umgedrehten U auf die Tasse 12 zu kleben. In einer anderen Ausführungsvariante könnte das Etikett 40 eine Außenkontur in Kreuzform aufweisen, wobei der Klebstoff nur an den vier Extremitäten der Kreuzform vorgesehen ist, wodurch das Etikett an allen 4 Seiten von außen an die Tasse geklebt werden kann und ein mittlerer Bereich frei von Klebstoff 4 die Öffnung überdeckt. Im Allgemeinen könnte statt einer Tasse auch ein anderes Verpackungsmaterial herangezogen werden, das z.B. eine Öffnung in einer ebenen Fläche aufweist, wie z.B. einen Beutel. Das Etikett kann hier mit Klebstoff an einem umlaufenden Rand, auf zwei gegenüberliegenden Randbereichen oder auch nur an einem einzigen streifenförmigen Randbereich auf das Verpackungsmaterial geklebt werden, wobei sich der Bereich des Etiketts, der frei von Klebstoff ist, über der Öffnung befindet.

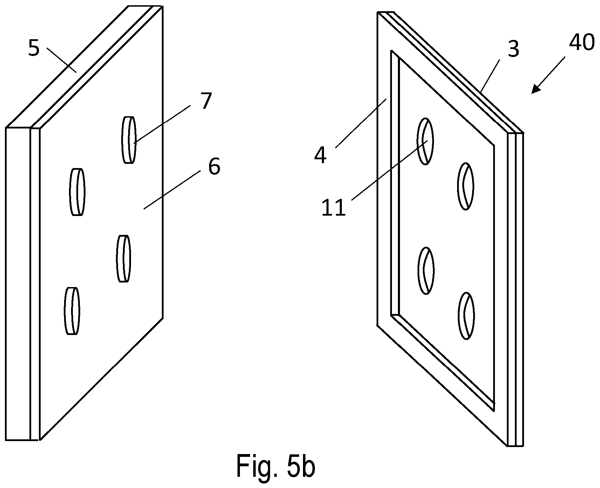

Die Herstellung des Selbstklebematerials 2, aus dem das Etikett 40 von Figur 4 hervorgeht, wird in den Figuren 5a und 5b dargestellt.

Figur 5a zeigt den Schritt des Bereitstellens des Trägermaterials 5 mit der teilweise darauf befindlichen Beschichtung 6 und das Bereitstellen des Obermaterials 3, wobei der Klebstoff 4 nur am Rand 14 des herzustellenden Etiketts 40 und an Zusatzklebestellen 15 in jenen Bereichen vorgesehen ist, an denen die Stanzabfälle 7 mit dem Trägermaterial 5 verbunden werden sollen. Beispielshaft ist dargestellt, dass die genannten Zusatzklebestellen 15 kleiner sein können als die zweiten Bereiche 9 bzw. die herzustellenden Stanzabfälle 7. Bevorzugt ist jedoch, wenn die Ränder der Zusatzklebestellen einen Abstand von maximal 0,5 mm bis zur herzustellenden Trennlinie 10 aufweisen.

Nachdem die genannten Komponenten gemäß Figur 5a bereitgestellt wurden, werden diese analog zu den Figuren 2b und 2c zusammengeführt und gestanzt, um den Haftverbund 1 zu erhalten. Figur 5b zeigt das Etikett 40 nach dem Spenden sowie das Trägermaterial 5, auf dem nun der Stanzabfall 7 haftet. Es ist ersichtlich, dass das Etikett 40 der Figur 5b jenem entspricht, das im Anwendungsfall der Figur 4 eingesetzt werden kann.

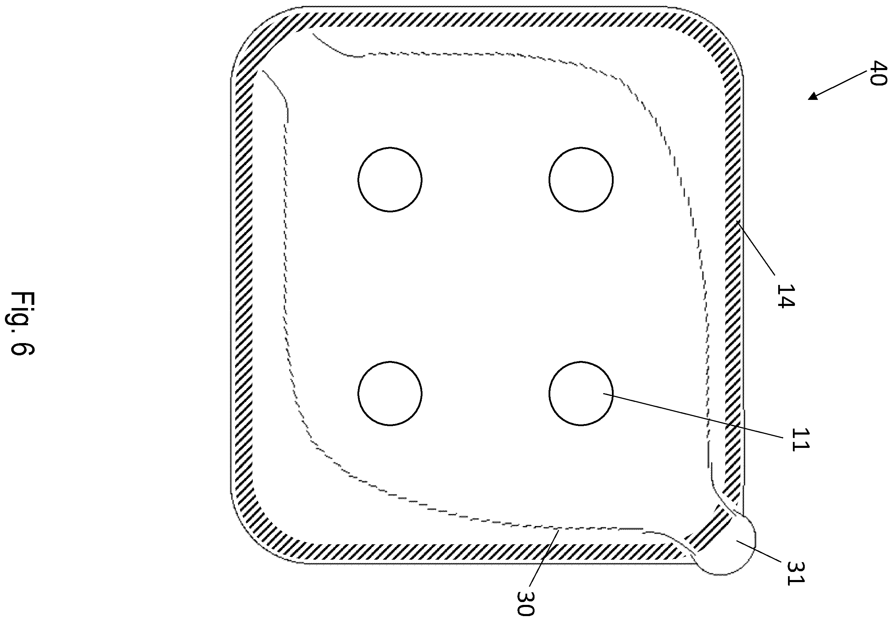

Figur 6 zeigt eine Variante eines Etiketts 40, das für eine Tasse 12 wie vorstehend beschrieben geeignet ist. Es ist ersichtlich, dass dieses Etikett 40 als selbstklebendes Etikett ausgeführt ist, die bevorzugt gerundete Ecken umfasst. Weiters kann das Etikett 40 Innenperforationen 30 aufweisen, die das Öffnen der Tasse 12 erleichtern. Die Innenperforationen 30 können zumindest abschnittweise oder vollständig als Schwächungslinien ausgeführt sein, und z.B. im Wesentlichen neben dem Klebstoff 4 und dem Bereich ohne Klebstoff verlaufen. Damit kann der Benutzer eine Lasche 31 des Etiketts ergreifen und an dieser anziehen, wodurch sich ein Teil des Etiketts 40 von der Tasse 12 ablöst, um den Innenraum der Tasse 12 freizugeben. Unter der Lasche 31 kann sich wahlweise Klebstoff 4 befinden oder nicht.

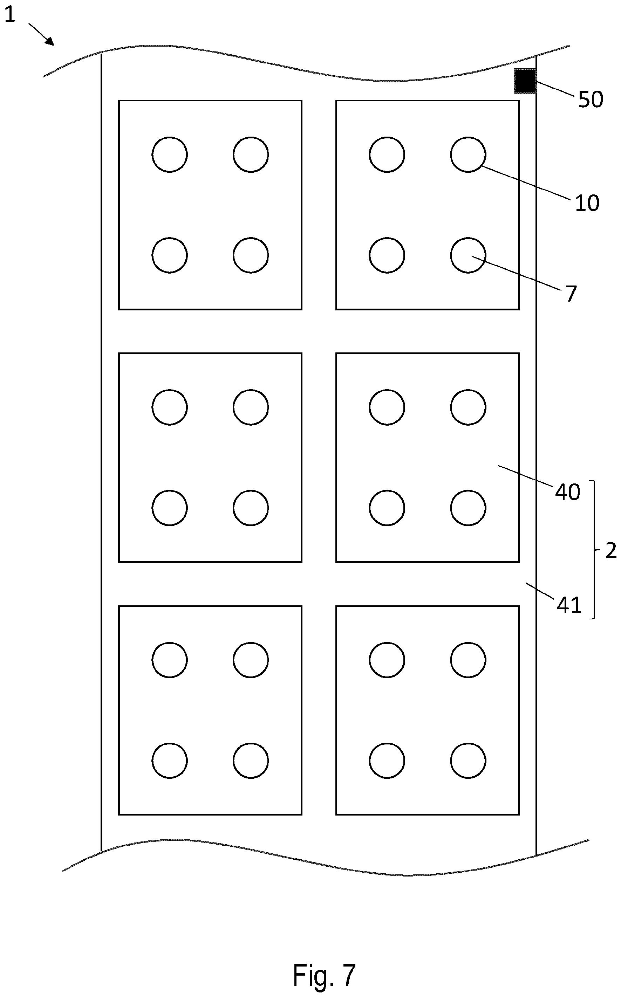

Figur 7 zeigt einen Haftverbund 1 mit einem Selbstklebematerial 2, das in mehrere Etiketten 40 trennbar ist. Eingangs ist hervorzuheben, dass das Obermaterial 3 vollflächig am Haftverbund 1 vorliegt. Durch einen (ersten) Stanzvorgang werden die Trennlinien 10 erzeugt, sodass das Obermaterial 3 in das Selbstklebematerial 2 und die innerhalb des Selbstklebematerials 2 liegenden Stanzabfälle 7 getrennt wird. Das Selbstklebematerial 2 nimmt weiterhin eine große Fläche des Haftverbunds ein und kann in einem (zweiten) Stanzvorgang (der aber auch gleichzeitig mit dem ersten Stanzvorgang stattfinden kann), in mehrere Etiketten 40 und ein Gitter 41 getrennt werden, das die Etiketten 40 voneinander beabstandet. Unter dem Gitter 41 kann nur der Klebstoff 4, nur die Oberflächenbeschichtung 5, sowohl der Klebstoff 4 als auch die Oberflächenbeschichtung 5 oder weder der Klebstoff 4 noch die Oberflächenbeschichtung 5 vorgesehen sein. Wie dargestellt kann eine Steuermarke 50 am Gitter vorgesehen sein.

Die Variante der Figur 7 ist jedoch nicht zwingend, da das Selbstklebematerial 2 nicht mit Außenkonturen versehen werden muss, sondern z.B. als Endlosband auf einer Rolle vorliegt und manuell unterteilt werden kann.

Der in den Figuren 2d und 5b dargestellte Haftverbund 1 hat jedoch den besonderen Vorteil, dass er auch noch nachträglich, d.h. nach den Stanzen der Stanzabfälle 7, vor oder nach dem Stanzen des Außenkonturen des Gitters 41 und vor dem Spenden, bedruckt werden kann, da er weiterhin eine ebene Oberfläche aufweist, die leicht bedruckbar ist. Dadurch kann der Haftverbund 1 der Figuren 2d und 5b in einer großen Auflage produziert werden und in kleineren Auflagen bedruckt werden. Die Druckaufträge können insbesondere erst einlangen, nachdem der Stanzvorgang der innenliegenden Bereiche bereits abgeschlossen wurde. Um dies umzusetzen, können das Obermaterial 3 und/oder das Trägermaterial beispielsweise Steuermarken aufweisen.

In einer weiteren, nicht beanspruchten Variante könnte der Haftverbund als "Linerless"-Variante vorgesehen sein, wo es kein Trägermaterial gibt. Dies ist vergleichbar mit einem Tape bzw. Klebeband, wo die Silikonisierung auf der Oberseite des Materials vorgesehen ist. Hier würde ein Produkt entstehen, wo die Stanzabfälle von den Ausnehmungen an der Oberseite des Fertigprodukts verbleiben.

Abschließend sei festgehalten, dass es auch möglich ist, keinen Klebstoff unter dem zu spendenden Material vorzusehen, sodass im Allgemeinen statt von Selbstklebematerial von einem Substrat gesprochen werden kann, das auch als nicht-selbstklebendes Substrat ausgeführt sein kann. Aus dem nicht-selbstklebenden Substrat können daraufhin nicht-selbstklebende Etiketten ausgelöst werden. In diesem Fall wird weiterhin Klebstoff zwischen Obermaterial und Trägermaterial vorgesehen, jedoch nur zwischen dem Trägermaterial und dem Stanzabfall und gegebenenfalls im Bereich des Gitters.

Es ist ersichtlich, dass verschiedene Merkmale in einer einzigen Ausführungsform zusammengefasst werden, um die Darstellung der Erfindung zu vereinfachen. Diese Art der Offenbarung ist nicht so zu verstehen, dass die beanspruchten Ausführungsformen mehr Merkmale erfordern, als in den einzelnen Ansprüchen ausdrücklich angegeben sind. Wie die Ansprüche zeigen, liegt der Erfindungsgegenstand vielmehr in weniger als allen Merkmalen einer einzigen offengelegten Ausführungsform.

## Patentansprüche

1. Verfahren zur Herstellung eines Haftverbunds (1) umfassend ein Trägermaterial (5) und ein Substrat, insbesondere Selbstklebematerial (2), mit zumindest einer innenliegenden ausgestanzten Ausnehmung (11), umfassend die Schritte:
- Bereitstellen des Trägermaterials (5), des Obermaterials (3), einer haftungssteuernden Oberflächenbeschichtung (6) und eines Klebstoffs (4),
- Zusammenführen des Trägermaterials (5) und des Obermaterials (3), wobei die Oberflächenbeschichtung (6) und der Klebstoff (4) zwischen dem Trägermaterial (5) und dem Obermaterial (3) angeordnet sind,
- Stanzen des Obermaterials (3) zur Trennung des Obermaterials (3) in zumindest ein Substrat und zumindest einen Stanzabfall (7), der innerhalb des zumindest einen Substrats liegt,
**dadurch gekennzeichnet, dass**
auf dem Trägermaterial (5) zumindest ein erster Bereich (8) mit der Oberflächenbeschichtung (6) und zumindest ein zweiter Bereich (9) frei von Oberflächenbeschichtung (6) vorgesehen ist,
wobei der Schritt des Stanzens derart erfolgt, dass das zumindest eine Substrat zumindest teilweise über einem ersten Bereich (8) angeordnet ist und der zumindest eine Stanzabfall (7) zumindest teilweise über einem zweiten Bereich (9) angeordnet ist,
wobei sich nach dem Zusammenführen Klebstoff (4) zwischen dem zweiten Bereich (9) und dem auszustanzenden Stanzabfall (7) befindet, sodass nach dem Abziehen des Substrats der Stanzabfall (7) am Trägermaterial (5) anhaftet, um die zumindest eine innenliegende ausgestanzte Ausnehmung (11) freizulegen.

2. Verfahren nach Anspruch 1, wobei das Substrat ein Selbstklebematerial (2) ist und sich der Klebstoff (4) nach dem Zusammenführen vollflächig zwischen dem Trägermaterial (5) und dem Obermaterial (3) befindet.

3. Verfahren nach Anspruch 1, wobei das Substrat ein Selbstklebematerial (2) ist und sich Klebstoff (4) nach dem Zusammenführen nur abschnittsweise zwischen dem Trägermaterial (5) und dem Selbstklebematerial (2) befindet.

4. Verfahren nach Anspruch 3, wobei das Selbstklebematerial (2) nach dem Zusammenführen unmittelbar um den auszustanzenden Stanzabfall (7) frei von Klebstoff (4) ist.

5. Verfahren nach Anspruch 3 oder 4, wobei sich nach dem Zusammenführen Klebstoff (4) nur an einem oder mehreren Randbereichen, bevorzugt nur an einem umlaufenden Rand (14), eines aus Selbstklebematerial (2) geformten Etiketts (40) befindet, und wobei sich Klebstoff (4) als zumindest eine Zusatzklebestelle (15) zwischen dem zweiten Bereich (9) und dem auszustanzenden Stanzabfall (7) befindet.

6. Verfahren nach einem der Ansprüche 1 bis 5, wobei das Substrat oder der Haftverbund (1) mit Informationen und/oder Dekorationen bedruckt wird.

7. Verfahren nach einem der Ansprüche 1 bis 6, wobei die Oberflächenbeschichtung (6) mittels eines Flexodruckverfahrens auf das Trägermaterial (5) aufgebracht wird.

8. Haftverbund (1) umfassend ein Trägermaterial (5) und ein Substrat, insbesondere ein Selbstklebematerial (2), mit zumindest einer innenliegenden ausgestanzten Ausnehmung (11), wobei der Haftverbund (1) ein mit einer haftungssteuernden Oberflächenbeschichtung (6) beschichtetes Trägermaterial (5), ein Obermaterial (3) und einen Klebstoff (4) umfasst, wobei sich der Klebstoff (4) zumindest abschnittsweise zwischen Trägermaterial (5) und Obermaterial (3) befindet und das Trägermaterial (5) mit dem Obermaterial (3) verbindet, wobei das Obermaterial (3) gestanzt ist und zumindest ein Substrat und zumindest einen Stanzabfall (7) ausbildet, der innerhalb des zumindest einen Substrats liegt, **dadurch gekennzeichnet, dass**
das Trägermaterial (5) zumindest einen ersten Bereich (8) mit der haftungssteuernden Oberflächenbeschichtung (6) und zumindest einen zweiten Bereich (9) frei von der Oberflächenbeschichtung (6) aufweist,
wobei das zumindest eine Substrat zumindest teilweise über einem ersten Bereich (8) angeordnet ist und der zumindest eine Stanzabfall (7) zumindest teilweise über einem zweiten Bereich (9) angeordnet ist,
wobei sich Klebstoff (4) zwischen dem zweiten Bereich (9) und dem Stanzabfall (7) befindet, sodass nach dem Abziehen des Substrats der Stanzabfall (7) am Trägermaterial (5) anhaftet, um die zumindest eine innenliegende ausgestanzte Ausnehmung (11) freizulegen.

9. Haftverbund (1) nach Anspruch 8, wobei das Substrat ein Selbstklebematerial (2) ist und sich der Klebstoff (4) vollflächig zwischen dem Trägermaterial (5) und dem Obermaterial (3) befindet.

10. Haftverbund (1) nach Anspruch 8, wobei das Substrat ein Selbstklebematerial (2) ist und sich Klebstoff (4) nur abschnittsweise zwischen dem Trägermaterial (5) und dem Selbstklebematerial (2) befindet.

11. Haftverbund (1) nach Anspruch 10, wobei der Bereich des Selbstklebematerials (2) unmittelbar um einen Stanzabfall (7) frei von Klebstoff (4) ist.

12. Haftverbund (1) nach Anspruch 10 oder 11, wobei sich Klebstoff (4) nur in einem oder mehreren Randbereichen, bevorzugt nur an einem umlaufenden Rand (14), eines aus Selbstklebematerial (2) geformten Etiketts (40) befindet, wobei sich Klebstoff (4) als zumindest eine Zusatzklebestelle (15) zwischen dem zweiten Bereich (9) und dem auszustanzenden Stanzabfall (7) befindet.

13. Haftverbund (1) nach einem der Ansprüche 8 bis 12, wobei das Obermaterial (3) und/oder das Trägermaterial (5) eine Steuermarke (50) aufweist.

14. Kit-of-Parts umfassend ein Verpackungsmaterial und einen Haftverbund (1) nach Anspruch 12, wobei das Verpackungsmaterial eine Öffnung aufweist und das vom Haftverbund (1) abziehbare Etikett (40) derart auf dem Verpackungsmaterial aufklebbar ist, dass der Randbereich auf dem Verpackungsmaterial befestigbar ist und der Bereich des Etiketts (40), der frei von Klebstoff ist, die Öffnung überdeckt.

15. Kit-of-Parts umfassend eine Tasse (12) und einen Haftverbund (1) nach Anspruch 12, wobei die Tasse (12) einen Boden und vier Seitenwände umfasst, die einen Innenraum der Tasse (12) begrenzen, wobei das Etikett (40) auf zumindest zwei, bevorzugt alle vier Seitenwände aufklebbar ist, um den Innenraum zu begrenzen, und das Etikett (40) Klebstoff (5) nur in jenem Bereich aufweist, der mit den Seitenwänden in Berührung steht, wobei bevorzugt zumindest zwei gegenüberliegende Seitenwände, bevorzugt alle vier Seitenwände, an jenem Ende, der dem Boden abgewandt ist, einen nach außen abstehenden Steg (13) aufweisen, auf welche die mit Klebstoff (4) versehenen Randbereiche oder der umlaufende Rand (14) des Etiketts aufklebbar sind.

16. Verwendung eines Haftverbunds (1) nach einem der Ansprüche 8 bis 13, wobei das Substrat, insbesondere Selbstklebematerial (2), vom Trägermaterial (5) abgezogen wird und der Stanzabfall (7) beim Abziehen des Substrats auf dem Trägermaterial (5) verbleibt.
